# EUROPEAN PATENT APPLICATION

(11) **EP 3 409 176 A1**
(43) Date of publication of application: **05.12.2018**
(21) Application number: 16888174.6
(22) Date of filing: 14.12.2016
(51) Int. Cl.: A47L 9/28, G05D 1/02

(54) **ELECTRIC VACUUM CLEANER**

(30) Priority: 29.01.2016 JP 2016016414
(71) Applicant: Toshiba Lifestyle Products & Services Corporation, Kawasaki-shi, Kanagawa 210-8543 (JP)
(72) Inventor: HOSHINO Susumu, Kawasaki-shi Kanagawa 210-8543 (JP)
(74) Representative: O'Connell, David Christopher
(86) International application number: PCT/JP2016/087307
(87) International publication number: WO 2017/130590

(57) **Abstract**

Provided is a vacuum cleaner (11) capable of shortening time for cleaning and thus performing efficient cleaning in accordance with a cleaning area. The vacuum cleaner (11) includes a main casing, a driving wheel, a cleaning unit (22), extraction means (77), and control means (27). The driving wheel enables the main casing to travel. The cleaning unit (22) cleans a floor surface. The extraction means (77) extracts feature points in a periphery of the main casing. The control means (27) controls the driving of the driving wheel to make the main casing autonomously travel. The control means (27), at the start of cleaning, compares the feature points extracted by the extraction means (77) and feature points corresponding to a previously-stored cleaning area to specify a present cleaning area.

## Description

### TECHNICAL FIELD

Embodiments described herein relate generally to a vacuum cleaner which can autonomously travel.

### BACKGROUND ART

Conventionally, a so-called autonomous-traveling type vacuum cleaner (cleaning robot) which cleans a floor surface as a cleaning-object surface while autonomously traveling on the floor surface has been known.

Such a vacuum cleaner stores in advance a room layout of a room to be cleaned or firstly travels in the room to store the room layout, and sets an optimal traveling route in accordance with the room layout, and then performs cleaning while traveling along the traveling route. However, in another room to be cleaned, since the stored room layout and a room layout of another room to be cleaned are different, storage of a new room layout and creation of its traveling route are required. In this case, in a vacuum cleaner, operation for actually cleaning a room and operation for storing a room layout are completely different. Therefore, creation of a traveling route for every room to be cleaned requires longer period of time, and further lowers cleaning efficiency.

### CITATION LIST

### Patent Literature

PTL 1: Japanese Laid-open Patent Publication No. 8-16241

### SUMMARY OF INVENTION

### Technical Problem

An object of the present invention is to provide a vacuum cleaner capable of shortening time for cleaning and performing efficient cleaning in accordance with a cleaning area.

### Solution to Problem

The vacuum cleaner of the embodiment includes a main casing, a driving wheel, a cleaning unit, extraction means, and control means. The driving wheel enables the main casing to travel. The cleaning unit cleans a cleaning-object surface. The extraction means extracts a feature point in a periphery of the main casing. The control means controls driving of the driving wheel to make the main casing autonomously travel. The control means compares, at the start of cleaning, the feature point extracted by the extraction means and a feature point corresponding to a previously-stored cleaning area to specify a present cleaning area.

### BRIEF DESCRIPTION OF DRAWINGS

[Fig. 1]

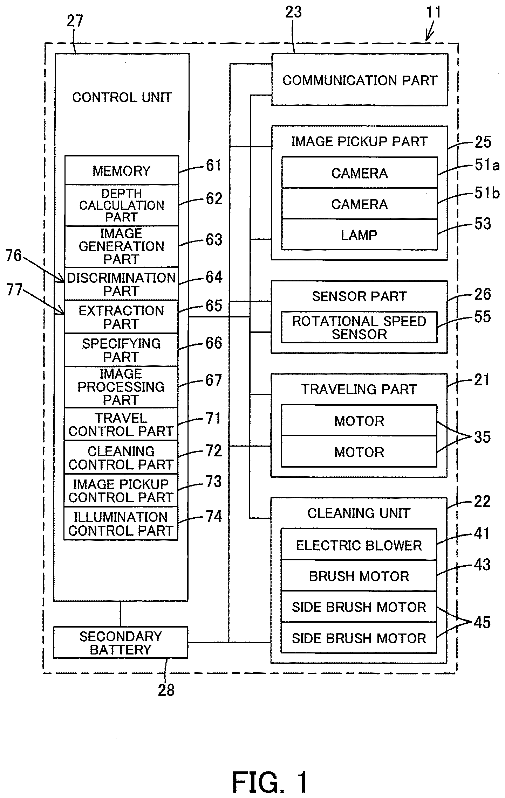

   Fig. 1 is a block diagram showing a vacuum cleaner according to an embodiment;
[Fig. 2]

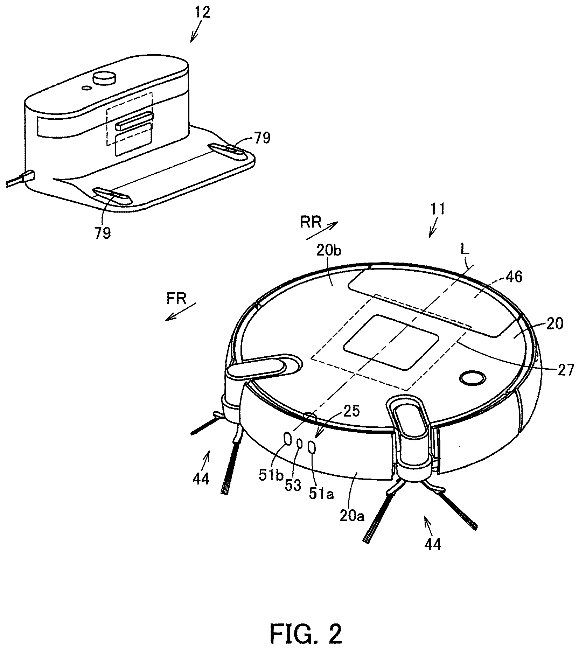

   Fig. 2 is a perspective view showing the above vacuum cleaner and a station device;
[Fig. 3]

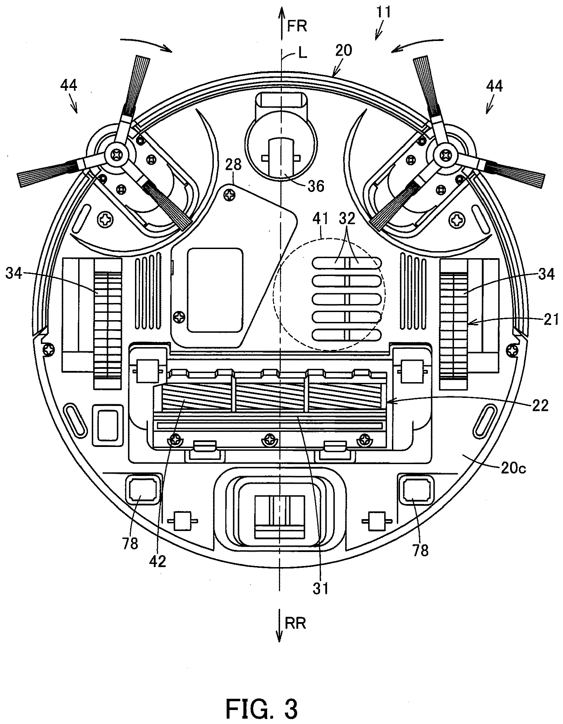

   Fig. 3 is a plan view showing the above vacuum cleaner as viewed from below;
[Fig. 4]

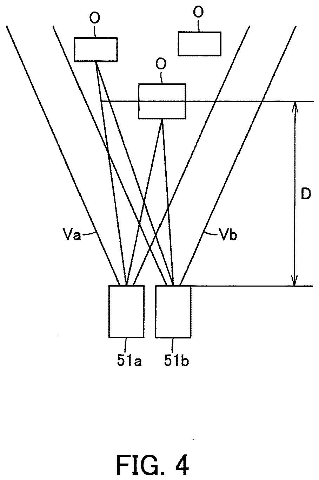

   Fig. 4 is an explanatory view schematically showing a method for calculating a depth of an object by the above vacuum cleaner;
[Fig. 5]

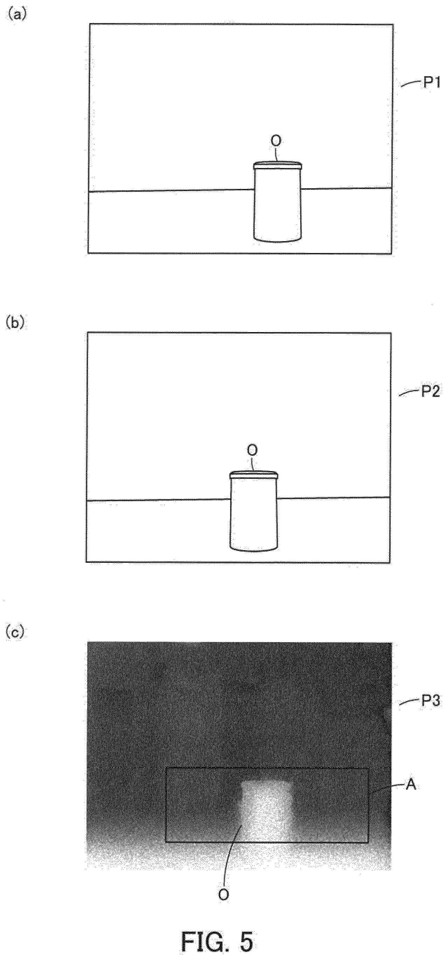

   Fig. 5(a) is an explanatory view showing an example of an image picked up by one image pickup means, (b) is an explanatory view showing an example of an image picked up by the other image pickup means, and (c) is an explanatory view showing an example of a distance image generated based on (a) and (b);
[Fig. 6]

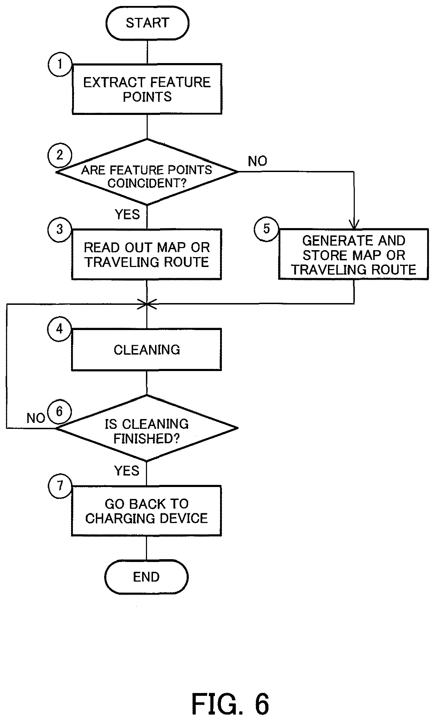

   Fig. 6 is a flowchart showing control of cleaning work of the above vacuum cleaner;
[Fig. 7]

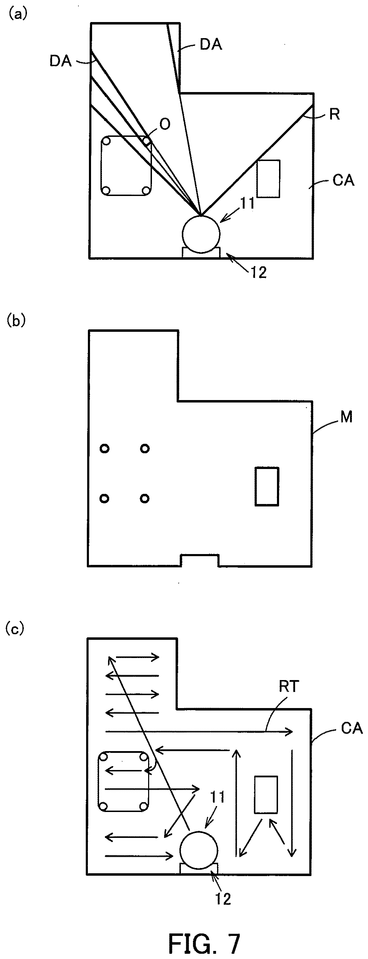

   Fig. 7(a) is an explanatory view schematically showing operation at the start of cleaning of the above vacuum cleaner, (b) is an explanatory view showing an example of a map of a stored cleaning area of the above vacuum cleaner, and (c) is an explanatory view showing an example of a traveling route of the above cleaning area;
[Fig. 8]

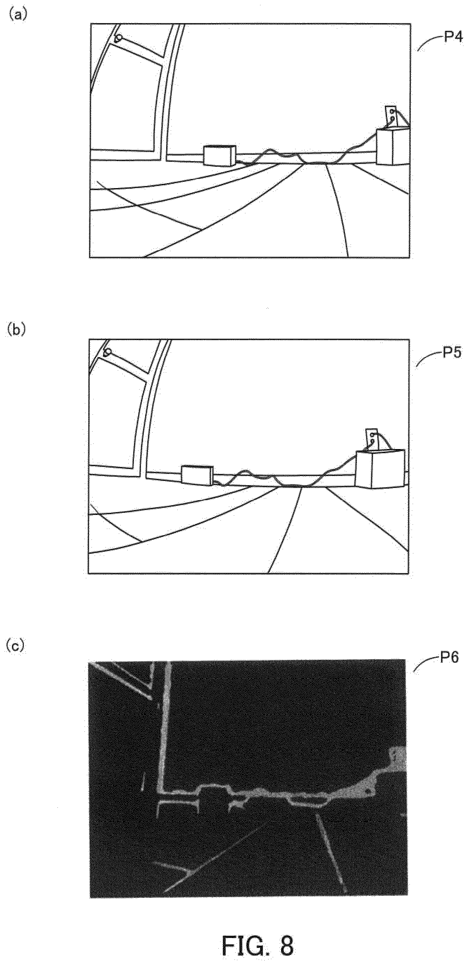

   Fig. 8(a) is an explanatory view showing an example of an image picked up by one image pickup means, (b) is an explanatory view showing an example of an image picked up by the other image pickup means, and (c) is an explanatory view showing an example of an image having feature points extracted based on (a) and (b); and
[Fig. 9]

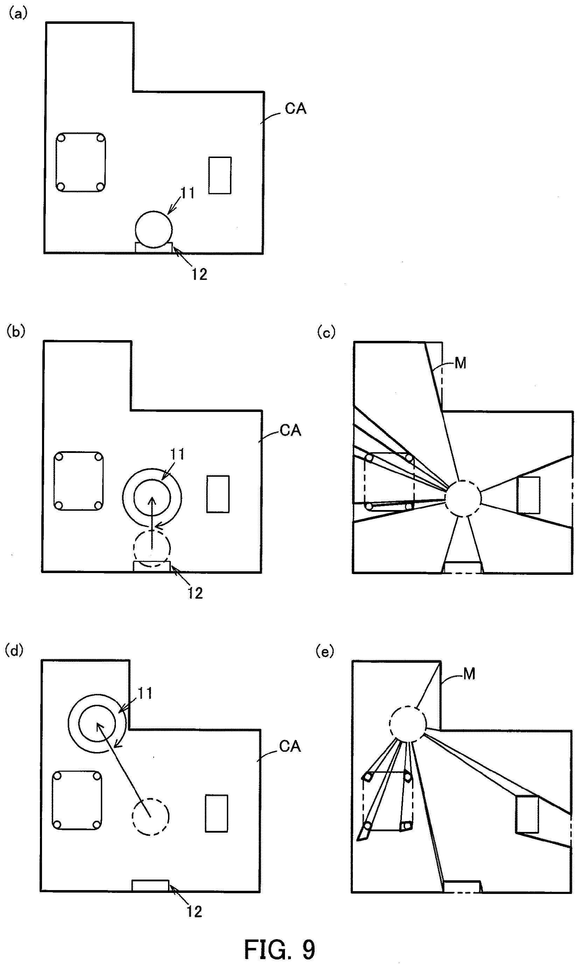

   Fig. 9(a) is a plan view schematically showing a cleaning area at the start of cleaning of the above vacuum cleaner, (b) is a plan view schematically showing operation at generation of a map or a traveling route of the above vacuum cleaner, (c) is a plan view showing an example of a map generated according to the operation of (b), (d) is a plan view schematically showing operation after (b) at generation of a map or a traveling route of the above vacuum cleaner, and (e) is a plan view showing an example of a map modified according to the operation of (d).

### DESCRIPTION OF EMBODIMENTS

Hereinbelow, the constitution of an embodiment will be described with reference to the accompanying drawings.

In Fig. 1 to Fig. 3, reference sign 11 denotes a vacuum cleaner, and this vacuum cleaner 11 constitutes a vacuum cleaner device (vacuum cleaner system) in combination with a charging device (charging stand) 12 as a station device serving as a base station for charging of the vacuum cleaner 11. Then, the vacuum cleaner 11 is, in this embodiment, a so-called self-propelled robot cleaner (cleaning robot) which cleans a floor surface that is a cleaning-object surface as a traveling surface while autonomously traveling (self-propelled to travel) on the floor surface.

The vacuum cleaner 11 also includes a hollow main casing 20. The vacuum cleaner 11 also includes a traveling part 21 to make the main casing 20 travel on a floor surface. Further, the vacuum cleaner 11 includes a cleaning unit 22 for cleaning dust and dirt on a floor surface or the like. The vacuum cleaner 11 may also include a communication part 23 for performing communication with an external device including the charging device 12. The vacuum cleaner 11 may further include an image pickup part 25 for picking up images. The vacuum cleaner 11 may also include a sensor part 26. Further, the vacuum cleaner 11 includes control means (a control unit) 27 which is a controller for controlling the traveling part 21, the cleaning unit 22, the communication part 23, the image pickup part 25 or the like. The vacuum cleaner 11 may also include a secondary battery 28 for supplying electric power to the traveling part 21, the cleaning unit 22, the communication part 23, the image pickup part 25, the sensor part 26, the control means 27 or the like. In addition, the following description will be given on the assumption that a direction extending along the traveling direction of the vacuum cleaner 11 (main casing 20) is assumed as a back-and-forth direction (directions of arrows FR and RR shown in Fig. 2) while a left-and-right direction (directions toward both sides) intersecting (orthogonally crossing) the back-and-forth direction is assumed as a widthwise direction.

The main casing 20 is formed into a flat columnar shape (disc shape) or the like from a synthetic resin, for example. That is, the main casing 20 includes a side surface portion 20a (Fig. 2), and an upper surface portion 20b (Fig. 2) and a lower surface portion 20c (Fig. 3) continuing from an upper portion and a lower portion of the side surface portion 20a, respectively. The side surface portion 20a of the main casing 20 is formed into a generally cylindrical-surface shape, and the image pickup part 25 or the like, for example, are disposed in the side surface portion 20a. Also, the upper surface portion 20b and the lower surface portion 20c of the main casing 20 are each formed into a generally circular shape, where a suction port 31 serving as a dust collecting port, an exhaust port 32 or the like are opened in the lower surface portion 20c facing the floor surface, as shown in Fig. 3.

The traveling part 21 includes driving wheels 34, 34 as a plurality (pair) of driving parts, and motors 35, 35 (Fig. 1) being driving means as operating parts for driving the driving wheels 34, 34. The traveling part 21 may include a swing wheel 36 for swinging use.

Each of the driving wheels 34 makes the vacuum cleaner 11 (main casing 20) travel (autonomously travel) in an advancing direction and a retreating direction on the floor surface, that is, serves for traveling use, and the driving wheels 34, having an unshown rotational axis extending along a left-and-right widthwise direction, are disposed symmetrical to each other in the widthwise direction.

Each of the motors 35 (Fig. 1) is disposed, for example, in correspondence with each of the driving wheels 34, and is enabled to drive each of the driving wheels 34 independently of each other.

The swing wheel 36, which is positioned at a generally central and front portion in the widthwise direction of the lower surface portion 20c of the main casing 20, is a driven wheel swingable along the floor surface.

The cleaning unit 22 includes an electric blower 41 which is positioned, for example, within the main casing 20 to suck dust and dirt along with air through the suction port 31 and discharge exhaust air through the exhaust port 32, a rotary brush 42 as a rotary cleaner which is rotatably attached to the suction port 31 to scrape up dust and dirt, as well as a brush motor 43 (Fig. 1) for rotationally driving the rotary brush 42, side brushes 44 which are auxiliary cleaning means (auxiliary cleaning parts) as swinging-cleaning parts rotatably attached on both sides of the main casing 20 on its front side or the like to scrape together dust and dirt, as well as side brush motors 45 (Fig. 1) for driving the side brushes 44, a dust collecting unit 46 (Fig. 2) which communicates with the suction port 31 to accumulate dust and dirt or the like. In addition, with respect to the electric blower 41, the rotary brush 42 as well as the brush motor 43 (Fig. 1), and the side brushes 44 as well as the side brush motors 45 (Fig. 1), it is sufficient that at least any one of these members is included.

The communication part 23 shown in Fig. 1 includes unshown transmission means (a transmission part), for example, an infrared emitting element for transmitting wireless signals (infrared signals) to the charging device 12 and the like; and unshown receiving means (a receiving part), for example, a phototransistor for receiving wireless signals (infrared signals) from the charging device 12, an unshown remote control and the like.

The image pickup part 25 includes a plurality of cameras 51a, 51b, for example as one and the other image pickup means (image pickup part bodies). The image pickup part 25 may include a lamp 53, such as an LED and the like, as illumination means (an illumination part) for illumination for these cameras 51a, 51b.

As shown in Fig. 2, the cameras 51a, 51b are disposed on both sides of a front portion in the side surface portion 20a of the main casing 20. That is, in this embodiment, the cameras 51a, 51b are disposed in the side surface portion 20a of the main casing 20 at positions which are skewed by a generally equal specified angle (acute angle) in the left-and-right direction with respect to a widthwise center line L of the vacuum cleaner 11 (main casing 20), respectively. In other words, these cameras 51a, 51b are disposed generally symmetrically in the widthwise direction with respect to the main casing 20, and a center position of these cameras 51a, 51b is generally coincident with a center position of the widthwise direction intersecting (orthogonally crossing) the back-and-forth direction, which is the traveling direction of the vacuum cleaner 11 (main casing 20). Further, these cameras 51a, 51b are disposed at generally equal positions in an up-and-down direction, that is, generally equal height positions, respectively. Therefore, these cameras 51a, 51b are set generally equal to each other in height from a floor surface while the vacuum cleaner 11 is set on the floor surface. Accordingly, the cameras 51a, 51b are disposed at separated and mutually shifted positions (positions shifted in the left-and-right direction). Also, the cameras 51a, 51b are digital cameras which pick up digital images of a forward direction, which is the traveling direction of the main casing 20, at specified horizontal angles of view (for example 105° or the like) and at specified time intervals, for example at a micro-time basis such as several tens of milliseconds or the like, or at a several-second basis or the like. Further, these cameras 51a, 51b have their image pickup ranges (fields of view) Va, Vb overlapping with each other (Fig. 4), so that (one and the other) images P1, P2 (Fig. 5(a) and Fig. 5(b)) picked up by these cameras 51a, 51b overlap with each other in the left-and-right direction at a region in which their image pickup regions contain a forward position resulting from extending the widthwise center line L of the vacuum cleaner 11 (main casing 20). In this embodiment, the cameras 51a, 51b are so designed to pick up images of a visible light region, for example. In addition, images picked up by the cameras 51a, 51b may be compressed into a specified data format by, for example, an unshown image processing circuit or the like.

The lamp 53 serves to emit illuminating light for image pickup by the cameras 51a, 51b, and is disposed at an intermediate position between the cameras 51a, 51b, that is, at a position on the center line L in the side surface portion 20a of the main casing 20. That is, the lamp 53 is distanced generally equally from the cameras 51a, 51b. Further, the lamp 53 is disposed at a generally equal position in the up-and-down direction, that is, a generally equal height position, to the cameras 51a, 51b. Accordingly, the lamp 53 is disposed at a generally center portion in the widthwise direction between the cameras 51a, 51b. In this embodiment, the lamp 53 is designed to emit light containing the visible light region.

The sensor part 26 shown in Fig. 1 includes a rotational speed sensor 55 such as an optical encoder for detecting rotational speed of each of the driving wheels 34 (each of the motors 35), for example. Based on measured rotational speeds of the driving wheels 34 (Fig. 3) or the motors 35, the rotational speed sensor 55 detects swing angle or progressional distance of the vacuum cleaner 11 (main casing 20 (Fig. 3)). Accordingly, the rotational speed sensor 55 is a position detection sensor for detecting a relative position of the vacuum cleaner 11 (main casing 20 (Fig. 3)) from a reference position, for example, the charging device 12 or the like. The sensor part 26 may further include, for example, a contact sensor as obstacle detection means for detecting an obstacle by contacting with the obstacle, an optical sensor as dust-and-dirt amount detection means for detecting an amount of dust and dirt to be collected in the dust collecting unit 46, or the like.

The control means 27 is a microcomputer including, for example, a CPU which is a control means main body (control unit main body), a ROM which is a storage part in which fixed data such as programs to be read by the CPU are stored, a RAM which is an area storage part for dynamically forming various memory areas such as a work area serving as a working region for data processing by programs or the like (where these component members are not shown). The control means 27 may further include, for example, a memory 61 as storage means (a storage section) for storing therein image data or the like picked up by the cameras 51a, 51b. The control means 27 may also include a depth calculation part 62 as calculation means (a calculation part) for calculating a depth of an object distanced from the cameras 51a, 51b based on images picked up by the cameras 51a, 51b. Further, the control means 27 may include an image generation part 63 as image generation means (an image generation part) for generating a distance image based on a depth of an object calculated by the depth calculation part 62. The control means 27 may also include a discrimination part 64 as obstacle discrimination means (an obstacle discrimination part) for discriminating an obstacle based on a depth calculated by the depth calculation part 62. Further, the control means 27 may include an extraction part 65 for extracting feature points from images picked up by the cameras 51a, 51b, in this embodiment from a distance image generated by the image generation part 63. The control means 27 may also include a specifying part 66 for specifying a cleaning area by comparing feature points extracted by the extraction part 65 and feature points stored (registered) in the memory 61 or the like. Further, the control means 27 may include an image processing part 67 as map generation means (a map generation part) for generating a map of a cleaning area based on a depth of an object calculated by the depth calculation part 62. The control means 27 may also include a travel control part 71 for controlling the operation of the motors 35, 35 (driving wheels 34, 34) of the traveling part 21. The control means 27 may further include a cleaning control part 72 for controlling the operation of the electric blower 41, the brush motor 43 and the side brush motors 45 of the cleaning unit 22. The control means 27 may also include an image pickup control part 73 for controlling the cameras 51a, 51b of the image pickup part 25. The control means 27 may further include an illumination control part 74 for controlling the lamp 53 of the image pickup part 25. Then, the control means 27 has, for example, a traveling mode for driving the driving wheels 34, 34 (motors 35, 35) to make the vacuum cleaner 11 (main casing 20) autonomously travel. The control means 27 may also have a charging mode for charging the secondary battery 28 via the charging device 12. The control means 27 may further have a standby mode applied during a standby sate.

The memory 61 is, for example, a nonvolatile memory such as a flash memory for holding various types of stored data regardless of whether the vacuum cleaner 11 is powered on or off.

The depth calculation part 62 uses a known method to calculate a depth of an object O based on images picked up by the cameras 51a, 51b and the distance between the cameras 51a, 51b (Fig. 5). That is, the depth calculation part 62, in which triangulation is applied, detects pixel dots indicative of identical positions from within individual images picked up by the cameras 51a, 51b and calculates angles of the pixel dots in the up-and-down direction and the left-and-right direction to calculate a depth from the cameras 51a, 51b at that position based on those angles and the distance between the cameras 51a, 51b. Therefore, it is preferable that images to be picked up by the cameras 51a, 51b overlap with each other as much as possible.

The image generation part 63 generates a distance image indicative of a distance of the object (feature points) calculated by the depth calculation part 62. The generation of the distance image by the image generation part 63 is implemented by displaying calculated pixel-dot-basis distances that are converted to visually discernible gradation levels such as brightness, color tone or the like on a specified dot basis such as a one-dot basis. In this embodiment, the image generation part 63 generates a distance image which is a black-and-white image whose brightness decreases more and more with increasing distance, that is, as a gray-scale image of 256 levels (=2⁸ with 8 bits), for example, which increases in blackness with increasing distance and increases in whiteness with decreasing distance in a forward direction from the vacuum cleaner 11 (main casing 20). Accordingly, the distance image is obtained by, as it were, visualizing a mass of distance information (distance data) of objects positioned within the image pickup ranges of the cameras 51a, 51b positioned forward in the traveling direction of the vacuum cleaner 11 (main casing 20). In addition, the image generation part 63 may generate a distance image showing only of the pixel dots within a specified image range in each of the images picked up by the cameras 51a, 51b, or may generate a distance image showing entire images.

The discrimination part 64 discriminates whether or not an object is an obstacle based on a depth of the object calculated by the depth calculation part 62. That is, the discrimination part 64 extracts a portion in a specified range, for example, a rectangular-shaped specified image range A (Fig.5 (c)) in a distance image P3 from depths calculated by the depth calculation part 62, and compares the depth of the object O in the image range A to a set distance D (Fig. 4), which is a previously-set or variably-set threshold, to discriminate that the object O positioned at a depth (distance from the vacuum cleaner 11 (main casing 20)) equal to or smaller than the set distance D is an obstacle. The image range A is set in correspondence to up-and-down, left-and-right magnitudes of the vacuum cleaner 11 (main casing 20). That is, the image range A is set to a range having such up-and-down, left-and-right magnitudes that the vacuum cleaner 11 (main casing 20), when traveling straightforward as it is, comes into contact with the range. Thus, an obstacle sensor 76 as obstacle detection means for detecting an obstacle is configured with the cameras 51a, 51b (image pickup part 25), the depth calculation part 62, the image generation part 63 and the discrimination part 64.

The extraction part 65 performs feature detection (feature extraction), for example, edge detection or the like, with regard to images picked up by the cameras 51a, 51b, in the embodiment with regard to a distance image generated by the image generation part 63 to extract feature points from the distance image. Any of known methods can be used as the edge detection method. Thus, as shown in Fig. 1, the extraction means 77 for extracting feature points (feature points in images picked up by the cameras 51a, 51b) in a periphery of the vacuum cleaner 11 (main casing 20) is configured with the cameras 51a, 51b (image pickup part 25), the depth calculation part 62, the image generation part 63, and the extraction part 65. Hereinafter, the periphery of the vacuum cleaner 11 includes not only the peripheral vicinity of the vacuum cleaner 11 (main casing 20) but also a position far from the vacuum cleaner 11 (main casing 20) (position in a range where the cameras 51a, 51b can pick up), for example, the ceiling.

The specifying part 66 compares the feature points extracted by the extraction part 65 (extraction means 77) and feature points of, for example, a map of a cleaning area which is stored in, for example, the memory 61 or the like to calculate a similarity rate, and also discriminates whether or not the cleaning area which is picked up by the cameras 51a, 51b and corresponds to the distance image in which feature points are extracted is coincident with a stored cleaning area to specify the present cleaning area. The feature points corresponding to a stored cleaning area may be previously input for registration by an owner in the form of a map or the like to the vacuum cleaner 11, or the feature points used when the vacuum cleaner 11 previously specifies a cleaning area may be stored in correspondence with the map of the cleaning area, the traveling route or the like where cleaning is implemented at that time.

The image processing part 67 calculates a distance between the vacuum cleaner 11 (main casing 20) and an object positioned in the periphery of the vacuum cleaner 11 (main casing 20) based on the depth of the object calculated by the depth calculation part 62, and calculates the cleaning area in which the vacuum cleaner 11 (main casing 20) is disposed and a positional relation of an object or the like positioned within this cleaning area based on the calculated distance and the position of the vacuum cleaner 11 (main casing 20) detected by the rotational speed sensor 55 of the sensor part 26, to generate a map and/or a traveling route.

The travel control part 71 controls a magnitude and a direction of current flowing through the motors 35, 35 to rotate the motors 35, 35 in a normal or reverse direction, thereby controlling the driving of the motors 35, 35. By controlling the driving of the motors 35, 35, the travel control part 71 controls the driving of the driving wheels 34, 34 (Fig. 3). The travel control part 71 is also configured to control a traveling direction and/or traveling speed of the vacuum cleaner 11 (main casing 20) in accordance with discrimination by the discrimination part 64.

The cleaning control part 72 controls conduction angles of the electric blower 41, the brush motor 43 and the side brush motors 45, independently of one another, to control the driving of the electric blower 41, the brush motor 43 (rotary brush 42 (Fig. 3)) and the side brush motors 45 (side brushes 44 (Fig. 3)). Also, the cleaning control part 72 is configured to control the operation of the cleaning unit 22 in accordance with discrimination by the discrimination part 64. In addition, control units may be provided in correspondence with the electric blower 41, the brush motor 43 and the side brush motors 45, independently and respectively.

The image pickup control part 73 includes a control circuit for controlling the operation of shutters of the cameras 51a, 51b, and operates the shutters at every specified time interval, thus exerting control to pick up images by the cameras 51a, 51b at every specified time interval.

The illumination control part 74 controls turn-on and -off of the lamp 53 via a switch or the like. The illumination control part 74 in this embodiment includes a sensor for detecting brightness around the vacuum cleaner 11, and makes the lamp 53 lit when the brightness detected by the sensor is a specified level or lower, and if otherwise, keeps the lamp 53 unlit.

The secondary battery 28 is electrically connected to charging terminals 78, 78 as connecting parts exposed on both sides of a rear portion in the lower surface portion 20c of the main casing 20 shown in Fig. 3, for example. With the charging terminals 78, 78 electrically and mechanically connected to the charging device 12 side, the secondary battery 28 is charged via the charging device 12.

The charging device 12 contains a charging circuit such as a constant current circuit. The charging device 12 also has terminals-for-charging 79, 79 for charging to be connected electrically and mechanically to the charging terminals 78, 78 of the vacuum cleaner 11. These terminals-for-charging 79, 79 are electrically connected to the charging circuit.

Next, the operation of the above-described embodiment will be described.

In general, work of a vacuum cleaner device is roughly divided into cleaning work for carrying out cleaning by the vacuum cleaner 11, and charging work for charging the secondary battery 28 with the charging device 12. The charging work is implemented by a known method where a charging circuit of the charging device 12 is applied. Accordingly, only the cleaning work will be described below. Also, image pickup work for picking up an image of a specified object by at least one of the cameras 51a, 51b in response to an instruction from an external device or the like may be included additionally.

In overview, in the cleaning work, the vacuum cleaner 11 extracts feature points in its periphery by use of the extraction means 77 at the start (step 1), and discriminates whether or not the extracted feature points are coincident with previously-stored feature points (step 2), as shown in the flowchart of Fig. 6. In step 2, upon discriminating that the feature points are coincident with each other, the control means 27 reads out the map or the traveling route corresponding to the feature points (step 3), and drives the driving wheels 34, 34 (motors 35, 35) to make the vacuum cleaner 11 (main casing 20) travel along the map or the traveling route, and also performs cleaning by use of the cleaning unit 22 (step 4). On the other hand, in step 2, upon discriminating that the feature points are not coincident with each other, the control means 27 controls the driving of the driving wheels 34, 34 (motors 35, 35) to make the vacuum cleaner 11 (main casing 20) travel, and also detects an obstacle by use of the obstacle sensor 76 to recognize an obstacle and the area where the vacuum cleaner 11 (main casing 20) can travel so as to generate and store a map and a traveling route (step 5). In step 4 for the next, the control means 27 drives the driving wheels 34, 34 (motors 35, 35) to make the vacuum cleaner 11 (main casing 20) travel along the generated map or traveling route, and also performs cleaning by use of the cleaning unit 22. Then, discrimination is performed (step 6) with regard to whether or not the cleaning is to be finished, such as whether or not the cleaning of the cleaning area is finished or whether or not a capacity of the secondary battery 28 is insufficient at present. Upon discriminating that the cleaning is not to be finished, the processing goes back to step 4. Upon discriminating that the cleaning is to be finished, the vacuum cleaner 11 goes back to a specified position (step 7), such as to the charging device 12, so as to finish the cleaning work.

In detail, in the vacuum cleaner 11, the control means 27 is switched over from the standby mode to the traveling mode to start cleaning work at, for example, an arrival of a previously-set cleaning start time or at reception of an instruction signal indicative of cleaning start transmitted by a remote control or an external device.

Next, in the vacuum cleaner 11, the cameras 51a, 51b pick up images of their forward direction from that position. Based on these images picked up by the cameras 51a, 51b, the control means 27 calculates a depth of a picked-up object by use of the depth calculation part 62, and generates a distance image by use of the image generation part 63. The area picked up by the cameras 51a, 51b is, as shown in Fig. 7(a), an area R where a dead angle DA generated due to an object O is excluded from a cleaning area CA, inside a viewing angle of the cameras 51a, 51b from the present position of the vacuum cleaner 11.

Further, the control means 27 extracts feature points by use of the extraction part 65 from the generated distance image. For example, Fig. 8(c) shows an image P6 having feature points (for example, edges such as of pits and bumps of a floor surface and objects positioned close to a wall surface) extracted from the distance image generated based on an image P4 shown in Fig. 8(a) and an image P5 shown in Fig. 8(b). Through comparison between the extracted feature points and feature points corresponding to a stored cleaning area (for example, a map M shown in Fig. 7(b)), a similarity rate is calculated. When the similarity rate is equal to or above a specified value, it is discriminated that the feature points are coincident with each other. When the similarity rate is less than the specified value, it is discriminated that the feature points are not coincident with each other. The discrimination is implemented one by one with regard to stored cleaning areas. Accordingly, when plural cleaning areas are stored, the above discrimination is continuously implemented until the cleaning area is specified. When the extracted feature points are not coincident with the feature points of all of the cleaning areas, it is discriminated that the feature points are not coincident. Also, when any of cleaning areas or any of feature points is not stored, it is discriminated that the feature points are not coincident.

Upon discriminating that the feature points are coincident with each other, the control means 27 specifies the present cleaning area as the stored cleaning area, reads out a map M (for example, Fig. 7(b)) or a traveling route RT (for example, Fig. 7(c)) corresponding to the specified cleaning area, and then is switched over to the cleaning mode described below.

Upon discriminating that the feature points are not coincident, that is, upon discriminating that information on the cleaning area is not stored, the control means 27 generates a map or a traveling route of the cleaning area by use of the image processing part 67. In generation of the map or the traveling route, in overview, the vacuum cleaner 11 (main casing 20) calculates a distance to an object present in the images picked up by the cameras 51a, 51b while traveling along an outer wall or the like in the cleaning area and swinging at the present position. Then, the vacuum cleaner 11 discriminates a wall and/or an obstacle based on the calculated distance to generate a map based on the present position of the vacuum cleaner 11 (map generation mode). A traveling route can be generated based on the generated map.

As one example of generation of the map, the vacuum cleaner 11 (main casing 20) in the state, for example, of being connected to the charging device 12 as shown in Fig. 9 (a) moves by a specified distance from the charging device 12 as shown in Fig. 9(b), and then picks up images by use of the cameras 51a, 51b while swinging (implementing spin turn) by a specified angle. In this case, the swinging angle of the vacuum cleaner 11 (main casing 20) is set at, for example, 360 degrees. Then, a position (coordinate) of an obstacle is recognized based on a distance between a picked-up object and the vacuum cleaner 11 (main casing 20) and the present position of the vacuum cleaner 11 (main casing 20), and a map M as shown in Fig. 9 (c) (shown by bold lines in the figure) is generated. The position to be a dead angle for the cameras 51a, 51b is treated as an obstacle or a wall. Next, as shown in Fig. 9 (d), the vacuum cleaner 11 (main casing 20) picks up images by use of the cameras 51a, 51b while also swinging (implementing spin turn) at a position where the vacuum cleaner 11 reaches after traveling toward a specified direction, recognizes a position (coordinate) of an obstacle based on a distance between a picked-up object and the vacuum cleaner 11 (main casing 20) and the present position of the vacuum cleaner 11 (main casing 20), and modifies the map M as shown in Fig. 9(e) (shown by bold lines in the figure). In this case, it is preferable that the above-mentioned specified direction be a direction where there is no obstacle in the map M originally generated. Repeating the operation appropriately when needed gradually reduces the positions treated as a dead angle, thereby providing recognizing of an obstacle and an area where the vacuum cleaner 11 (main casing 20) can travel, resulting in completing the map M. Then, upon discriminating that the entire cleaning area is mapped (upon discriminating that a specified range or more of the cleaning area is mapped), the control means 27 finishes the map generation mode and generates a traveling route based on the map when needed, and then is switched over to the cleaning mode described below. This traveling route is, for example, a route by which the vacuum cleaner 11 (main casing 20) can travel in the cleaning area efficiently in the shortest distance, a route by which the vacuum cleaner 11 (main casing 20) can effectively clean points which are assumed to easily become dirty in the cleaning area, or other route.

Then, the vacuum cleaner 11 performs cleaning (in the cleaning mode) while autonomously traveling in the cleaning area based on the map or the traveling route read out, or a map or a traveling route newly generated and stored. In autonomous traveling, in overview, the vacuum cleaner 11 calculates a distance to an object present in the images picked up by the cameras 51a, 51b while traveling forward, discriminates a wall or an obstacle based on the distance and the map or the traveling route, and performs cleaning by use of the cleaning unit 22 while traveling and avoiding these walls and obstacles. In addition, the map may be modified based on the obstacles and walls discriminated at the cleaning.

As a result, while autonomously traveling all over the floor surface in the cleaning area under avoidance of obstacles, the vacuum cleaner 11 (main casing 20) makes the control unit 27 (cleaning control part 72) operate the cleaning unit 22 to clean dust and dirt on the floor surface. That is, the vacuum cleaner 11 provides continuous operation such as by continuing the cleaning work even if an obstacle is detected.

As for the cleaning unit 22, dust and dirt on the floor surface are collected to the dust collecting unit 46 via the suction port 31 by the electric blower 41, the rotary brush 42 (brush motor 43) or the side brushes 44 (side brush motors 45) driven by the control means 27 (cleaning control part 72). Then, in the case where the cleaning in the cleaning area is finished or in a specified condition such as where the capacity of the secondary battery 28 is decreased to a specified level during the cleaning work, the specified level being insufficient for completion of cleaning or image pickup (the voltage of the secondary battery 28 has decreased to around a discharge termination voltage), the control means 27 (travel control part 71) of the vacuum cleaner 11 controls the operation of the motors 35, 35 (driving wheels 34, 34) to return to the charging device 12. Thereafter, when the charging terminals 78, 78 and the terminals-for-charging 79, 79 of the charging device 12 are docked together, the cleaning work is finished and the control means 27 is switched over to the standby mode or the charging mode.

In accordance with the above-described embodiment, the control means 27 compares the feature points in the periphery of the main casing 20 (vacuum cleaner 11) extracted by the extraction means 77 and feature points corresponding to a stored cleaning area at the start of cleaning to specify the present cleaning area. When the specified cleaning area is coincident with a previously-stored cleaning area, the control means 27 can start cleaning immediately without taking time to perform searching in the cleaning area or to newly generate a map or a traveling route. This shortens time for cleaning to enable efficient cleaning in accordance with the cleaning area.

After specifying the cleaning area, the control means 27 controls the driving of the driving wheels 34, 34 (motors 35, 35) to make the main casing 20 (vacuum cleaner 11) travel based on the map M (Fig. 7(b)) of the cleaning area or the traveling route RT (Fig.7(c)) previously stored, thus enabling efficient cleaning in accordance with the room layout of the cleaning area and the arrangement of obstacles.

Also, in the case where the similarity rate with regard to the feature points extracted by the extraction means 77 and feature points of a stored cleaning area is less than a specified value, the control means 27 controls the driving of the driving wheels 34, 34 (motors 35, 35) to make the main casing 20 (vacuum cleaner 11) travel, and also detects obstacles by use of the obstacle sensor 76 and recognizes obstacles and an area where the main casing 20 (vacuum cleaner 11) can travel to generate and store a map or a traveling route corresponding to the cleaning area. At the time of the next and succeeding cleaning in the cleaning area, this enables immediate start of cleaning by use of the stored map or the stored traveling route, and also enables efficient cleaning in accordance with the room layout of the cleaning area, the arrangement of obstacles, and the like.

In addition, although the depth calculation part 62, the image generation part 63, the discrimination part 64, the extraction part 65, the cleaning control part 72, the image pickup control part 73 and the illumination control part 74 are each provided in the control means 27, these members may also be provided as independent members respectively, may be arbitrarily combined in two or more among these members, or may be separated from the control means 27.

Also, three units or more of the image pickup means may be set. That is, arbitrary plural units of the image pickup means may be used, and the number of the units is not limited.

Further, a TOF distance image sensor or the like may be used as the obstacle sensor 76, instead of the cameras 51a, 51b.

Also, although the embodiment is configured to start cleaning from the position of the charging device 12, starting position for cleaning may be set arbitrarily.

Further, as a station device, not only the charging device 12, a station device including any other function may also be used, for example, a dust station for collection of the dust and dirt collected to the dust collecting unit 46.

While certain embodiments have been described, these embodiments have been presented by way of example only, and are not intended to limit the scope of the inventions . Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

A control method for a vacuum cleaner, the method comprising the steps of: extracting a feature point in a periphery at a start of cleaning; and comparing the extracted feature point and a feature point corresponding to a previously-stored cleaning area to specify a present cleaning area.

The control method for a vacuum cleaner as described above, comprising the step of, after specifying the cleaning area, performing autonomous traveling based on a map of the previously-stored cleaning area.

The control method for a vacuum cleaner as described above, comprising the step of, when a similarity rate with regard to the extracted feature point in the periphery and the feature point of the stored cleaning area is less than a specified level, detecting an obstacle while performing the autonomous traveling to recognize a travelable area and the obstacle and to generate and store a map corresponding to the cleaning area.

The control method for a vacuum cleaner as described above, comprising the step of, after specifying the cleaning area, performing autonomous traveling based on a traveling route corresponding to the previously-stored cleaning area.

The control method for a vacuum cleaner as described above, comprising the step of, when a similarity rate with regard to the extracted feature point in the periphery and the feature point of the stored cleaning area is less than a specified level, detecting an obstacle while performing the autonomous traveling to recognize a travelable area and the obstacle and to generate and store a traveling route corresponding to the cleaning area.

## Claims

1. A vacuum cleaner comprising:
a main casing;
a driving wheel for enabling the main casing to travel;
a cleaning unit for cleaning a cleaning-object surface;
extraction means for extracting a feature point in a periphery of the main casing; and
control means for controlling driving of the driving wheel to make the main casing autonomously travel, wherein
the control means compares, at a start of cleaning, the feature point extracted by the extraction means and a feature point corresponding to a previously-stored cleaning area to specify a present cleaning area.

2. The vacuum cleaner according to Claim 1, wherein
after specifying the cleaning area, the control means controls the driving of the driving wheel to make the main casing to travel based on a map of the previously-stored cleaning area.

3. The vacuum cleaner according to Claim 2, comprising:
obstacle detection means for detecting an obstacle, wherein
when a similarity rate with regard to the feature point extracted by the extraction means and the feature point of the stored cleaning area is less than a specified level, the control means controls the driving of the driving wheel to make the main casing travel and also detects an obstacle by use of the obstacle detection means, to recognize an area where the main casing can travel and the obstacle, and to generate and store a map corresponding to the cleaning area.

4. The vacuum cleaner according to Claim 1, wherein
after specifying the cleaning area, the control means controls the driving of the driving wheel to make the main casing travel based on a traveling route corresponding to the previously-stored cleaning area.

5. The vacuum cleaner according to Claim 4, comprising:
obstacle detection means for detecting an obstacle, wherein
when a similarity rate with regard to the feature point extracted by the extraction means and the feature point of the stored cleaning area is less than a specified level, the control means controls the driving of the driving wheel to make the main casing travel and also detects an obstacle by use of the obstacle detection means, to recognize an area where the main casing can travel and the obstacle, and to generate and store a traveling route corresponding to the cleaning area.
